# EUROPEAN PATENT APPLICATION

(11) **EP 1 843 581 A2**
(43) Date of publication of application: **10.10.2007**
(21) Application number: 07251535.6
(22) Date of filing: 05.04.2007
(51) Int. Cl.: H04N 5/74

(54) **Video processing and display**

(30) Priority: 06.04.2006 GB 0606965
(71) Applicant: BRITISH BROADCASTING CORPORATION, London W1A 1AA (GB)
(72) Inventor: Thomas, Graham Alexander, Nutley Uckfield East Sussex TN22 3HA (GB); Sargeant, Timothy John, Sutton Surrey SM1 4QE (GB); Chandaria, Jigna, South Croydon CR2 7HG (GB); Weir, Bruce Alexander, Enfield EN2 6TY (GB); Debenham, Paul Richard, Crawley West Sussex RH10 7HQ (GB)
(74) Representative: Garratt, Peter Douglas

(57) **Abstract**

To supplement a video display on a conventional television, a surround video stream is projected onto wall and other surfaces adjacent the television. The surround video stream may derive from a wide angle lens camera positioned alongside the main camera. The surround video stream may be processed in a local processor to compensate for departures from planar geometry in the wall surfaces. Where no surround video stream is received, a video processor may synthesize a surround video stream from the main video signal. Moving objects represented in the main video signal may be synthesized in the surround video to provide the perception of movement across the viewer's full field of view.

## Description

The present invention relates to video processing and display. Embodiments aim to provide a viewer with a wider field-of-view - leading to a greater sense of immersion than a traditional video presentation - without requiring a larger television or display screen.

Traditional television viewing in domestic environments usually comprises a single, television monitor. In some situations, a flat-screen display or projector may be used to provide a larger viewing area. It is reasonably common for viewers to choose to augment or replace the audio capabilities of the display with an external stereo or surround sound hi-fi system.

One known system (Philips Ambilight FlatTV TM) includes a built in soft light, which emanates onto the wall surrounding the television and aims to provide a more relaxed viewing environment as well as to improve the perceived picture detail, contrast and colour. The colour of the surrounding light may be adjusted in line with prevailing colours in the screen image, but there is no further image information. Thus this may improve perception but does not provide any real sense of enhanced "immersion" in the scene, as it occupies only a small proportion of the viewer's visual field, and is only very weakly related to the picture content.

Watching a broadcast television programme or a DVD film in the home thus provides a very different experience from viewing 'real world' scenes. The angle subtended by the video image to the eye is only a few degrees at either optimum or typical viewing distances. Much of the field of view of the eye is filled with the viewing environment - the living room furniture, wall decoration, and so on.

Conventional methods for achieving a wide-angle display, such as IMAX, require a very high-definition camera and display system, and are unsuitable for use in a domestic environment. The data rate required to deliver such a high-definition image over a broadcast link makes deploying such a system impractical.

Furthermore, were such a system to be set up in a domestic environment, any conventional TV set would have to be removed to make space, interfering with viewing of conventional TV.

The present invention seeks to provide an improved viewing system alleviating the drawbacks of the above-mentioned systems. Advantageously, embodiments may be backwards compatible with existing television equipment.

In one aspect, the present invention consists in a method of providing a video display comprising the steps of providing a primary video display in a primary display region; providing a surround video display in a region surrounding the primary display region, wherein the surround video display is of lower quality than the primary video display.

In another aspect, the present invention consists in a method of providing a video display comprising the steps of providing a primary video display in a primary display region; and providing a surround video display in a region surrounding the primary display region, wherein the surround video display is of lower resolution than the primary display and wherein the surround video display extends over a substantially larger field of view than the primary display.

In another aspect, the present invention consists in a method of distributing video content, comprising the steps of supplying a primary representation of a first view of a scene which representation is decodable to provide a primary video display; and supplying a surround representation of a second view of the scene, being a wider angle view than said first view, which surround representation is separately decodable to provide a surround video display in a region surrounding the primary display region.

In another aspect, the present invention consists in a method of distributing video content, comprising the steps of supplying a primary representation of a first view of a scene which representation is decodable to provide a primary video display; and supplying surround information which surround representation is separately decodable to provide a surround video display in a region surrounding the primary display region such that apparent motion of at least one object in the primary video display is extrapolated into the surround video display.

In another aspect, the present invention consists in video processing apparatus comprising an input stage for receiving a video input; a primary display driver connected with the input stage and adapted to provide a primary video signal for a primary display on a screen in a room; and a surround video processor connected with the input stage and adapted to provide a surround video signal for a surround display projected onto surfaces of the room adjacent the screen, the surround video processor being adapted to hold geometrical parameters of said surfaces and to compensate in said surround video signal for said parameters.

In another aspect, the present invention consists in video processing apparatus comprising an input stage for receiving a video input; a primary display driver connected with the input stage and adapted to provide a primary video signal for a primary display; a surround video processor connected with the input stage adapted to provide a surround video signal for a surround display in which the trajectory of moving objects represented in the primary display is extrapolated into the surround display.

In another aspect, the present invention consists in a method of calibrating a video display apparatus including a primary video display and a surround video projector, the method comprising registering the projector and primary video display so that the projected surround video surrounds but does not substantially overlap the primary video display.

In another aspect, the present invention consists in a method of calibrating a video display apparatus including a primary video display and a surround video projector, the method comprising storing data indicative of the geometry and/or reflectivity and/or colour of the surroundings of the primary video display for use in modifying a surround video image to be projected onto the surroundings.

In another aspect, the present invention consists in video processing apparatus means for receiving video information; means for outputting a signal to a primary video display; surrounding object information storage means; image transformation means for transforming surround video image data based on the stored surrounding object information and means for outputting a surround video signal to a surround projector.

In another aspect, the present invention consists in a system comprising a primary display driver for outputting a signal to a primary video display; a surrounding object information store; an image transformation processor for transforming surround video image data based on the stored surrounding object information; a surround video display driver for outputting a surround video signal; and a surround projector receiving the surround video signal.

In another aspect, the present invention consists in video capture apparatus comprising; primary video capture means for capturing primary video corresponding to at least one broadcast standard for a primary field of view; surround video capture means for capturing surround video for a surround field of view surrounding the primary field of view.

In another aspect, the present invention consists in a computer program or computer program product or logic or video processing hardware configured to perform a method comprising the steps of receiving at least one encoded video signal; providing a primary signal to generate a primary video display on a primary display device; providing a surround signal to generate a surround video display by projection onto at least one object surrounding the primary display device wherein apparent motion of at least one object in the primary video display is extrapolated into the surround video display.

It will be appreciated that there is considerable correspondence between capture and playback and processing features. For conciseness features are generally identified herein in a single context; method features may be provided as apparatus features (or computer code or program features) and vice versa and features of the capture system may be applied to the playback system and vice versa unless otherwise explicitly stated or clearly implied by context.

Embodiments may fill a large portion of the eye's view - both the central and peripheral vision areas - and thereby increase the sense of immersion in the presented scene.

In a preferred embodiment it is proposed that, a secondary (high definition) camera fitted with a wide angle or fish-eye lens is associated with and, typically, rigidly mounted to the main camera. Whilst the main camera records action as usual, the secondary camera records the surrounding scene. The fish eye lens may have close to 180° field of view. The precise field of view and other characteristics of the secondary camera are not critical to this invention.

Both main and secondary recordings may be made available as two separate but synchronous video streams. Those viewers with the required playback equipment can use the second 'surround' video stream to project an image onto the walls, floor and ceiling of their viewing environment and substantially fill their field of view. Real-time image manipulation software is preferably provided to remove the distortion imposed on the image by the geometry (or other characteristics) of the room. The portion of the projected image that would fall on the normal TV display is typically blanked, but may be at a lower intensity so as not to be problematic.

Thus, a high-resolution video image is displayed on a smaller screen in the centre of the viewer's gaze. The second 'surround' video is displayed over a much larger area filling the viewer's peripheral vision. Because of the large surface area over which the secondary stream is displayed, it is perceived as a lower resolution image.

Those with only regular viewing equipment are free to watch the standard video stream as usual.

In cases where it is impossible or impractical to capture a contemporaneous "surround" video recording (or for use with archive or other video that was not captured using a secondary camera as described above), the present invention contemplates analysis of the main video image (and possibly also the audio soundtrack) to synthesize a surround video stream, which is related to the main video image spatially, by colour and by motion (of main camera or of objects in the scene) as examples.

The 'surround' video image will generally be of lower quality than the main image: it will almost certainly be of lower spatial resolution, it is likely to be dimmer, and is likely to show some residual distortion due to failures to accurately compensate for the geometry of the walls. However, since the programme being viewed will have been shot so as to put the main focus of interest on the conventional display (as the programme will generally be shot to look sensible for viewers without the benefit of the surround image), the viewer's attention will usually be concentrated on this display. The main task of the 'surround' image is to provide information for the viewer's peripheral vision, where requirements for resolution and other aspects of image quality are generally lower.

Embodiments of the invention will now be described by way of example with reference to the accompanying drawings in which:
Fig. 1 shows a capture system;
Fig. 2 shows a playback system;
Fig. 3 shows a recording and delivery system;
Fig. 4 illustrates extrapolation from a primary image; and
Fig. 5 illustrates alternative extrapolation from a primary image.

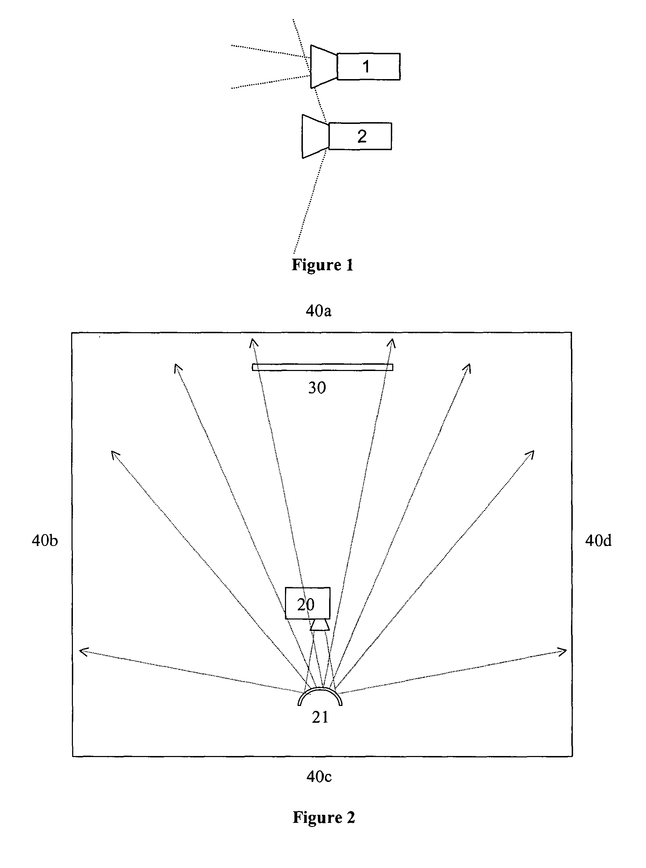

Referring to Figure 1, two cameras 10,11 are used which are rigidly mounted together in a frame. The cameras can be handheld, mounted on a tripod or supported in any other appropriate manner. The main camera 10 is free to be moved to frame shots as usual; the second camera 11 is fitted with a fish-eye lens, such that it captures a very much wider field of view than the main camera and is used to record the surround video stream. The surround video stream captures the environment in which the scene was recorded, putting it into better context.

The cameras are frame-synchronized. A clapperboard may be used, as is common in television and film productions; the synchronism could equally be provided electronically using genlock and time code.

Referring to Figure 2, an existing video playback system (which is assumed to comprise of a video display, with internal or external audio capabilities) is supplemented with a projector. The standard display system is used to present the main video stream, as usual. This may comprise a "conventional" television, which term is intended to encompass without limitation a cathode ray tube, plasma screen, liquid crystal display and may be analogue, digital, high definition. It may also include a video projection screen onto which an image is projected by a video projector, which may or may not be integrated with the projector to be described below.

In one example of a system according to this invention, a projector 20 is used to project the wide field-of-view video stream onto the walls (40a-d), ceiling and floor of the viewing environment. The wide-angle projection is obtained by using a conventional video projector 20 and a curved mirror 21.

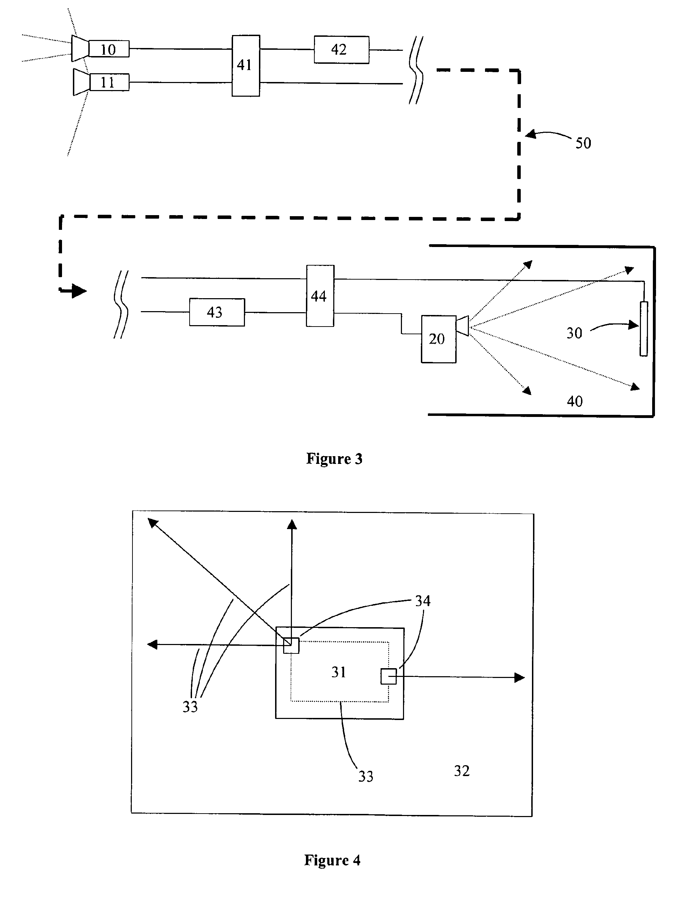

Referring to Figure 3, there is provided a system for recording a surround video stream, delivering said stream to a user and displaying the stream. The image capture system comprises two cameras as before - one for the main image 10 and a second 11, with a fish-eye lens; this provides the video stream. The video is then processed in editing and post-production 41. When the zoom of the main camera changes, the scale factor for the surround image may be adjusted accordingly. Image-based analysis 42 can occur by
i. analyzing the main and surround images in order to deduce their relative scale factors (many techniques in the field of image processing are known which could be used for this task, for example correlation-based methods, object matching or recognition, or motion estimation) or
ii. analyzing data from sensors attached to the camera lenses that indicated their focal length.

Similar techniques could be used to determine or specify the relative positioning of the main and surround video (for example, the surround video may be centred on the main image, or it may be centred a little way above, to give a more extensive view of objects above the camera rather than below). This analysis could also be carried out later at the end-user. The video stream is delivered via broadcast or physical media 50 to the user. Upon delivery, geometric correction is performed to correct distortions due to the viewing environment 43; in addition image-based analysis may be carried out, especially in cases where no surround video stream was recorded. Real-time video manipulation software may be used to remove the distortion imposed on the image by the fixed geometry of the room. This software performs additional scaling of the surround image, such that it correctly matches the scale of objects shown in the main video. Re-timing of the two video streams occurs 44 in order to compensate for processing delays. The main image is displayed on a video display 30 such as an LCD monitor. The peripheral image is projected onto the viewing environment 40 by a projector 20 or projecting system as depicted in Figure 2.

For cases where no surround video stream was recorded, the video may be analyzed to synthesize a surround video stream. A number of example algorithms are suggested here; any one of these or combinations or modifications may be used.

### 1. Edge colour extrapolation

To provide a wider surround view from existing video material it is proposed to synthesize a surround video signal. This signal contains aspects of the motion and the predominant colour from the edges of the original image. The use of the predominant edge colour allows the extended view to match the background colour in the video and so providing a basic sense of being surrounded by the scene. Motion in the original image is represented in the synthesized view to give extra movement cues to the viewer so that movement on the conventional display is also represented on the surrounding view.

To extract basic motion and colour from the edges of the conventional image, the average colour is taken from blocks of pixels from around the edge of the image and replicate them to fill the larger surround image.

Referring to Figure 4, this averaging process is done for each pixel along a border 33 within the edge of the image 31. This border is smaller than the picture size to take into account any letterboxing or pillar boxing black borders of the image. For each pixel along the line of this border the n x n block of pixels 32 containing the border pixel is averaged together to find the average colour for the block. The resulting colour for the block is then replicated within the surround video image 32 across a line 35 from where original pixel lines up within the larger surround image to the edge of the projected view.

The area within the surround image that the conventional display fills is then set to black in the image. This stops light from the projected surround image landing on the conventional display. The brightness of the synthetic image can also be adjusted so that pixels get darker the further they are from the centre of the image to fade out the surround view.

This approach works well for the sides of the display. Motion within the synthetic view matches well with the original image and appears somewhat like the change of reflected light caused by the movement of the foreground objects. The extent to which motion and textural detail are represented in the surround view can be controlled by the size of the averaging blocks. The sizing of the averaging border also can be used to control the extent to which objects within the foreground of the scene occur within the surround image.

However, this approach may have limitations at the corner areas of the surround view as a single pixel block value is replicated to fill an entire corner area of the larger image. To minimize the effect of this, filtering may be performed on the entire synthesized view to the smooth the transition between the sides and the corners of the surround image.

### 2. Radial colour extrapolation

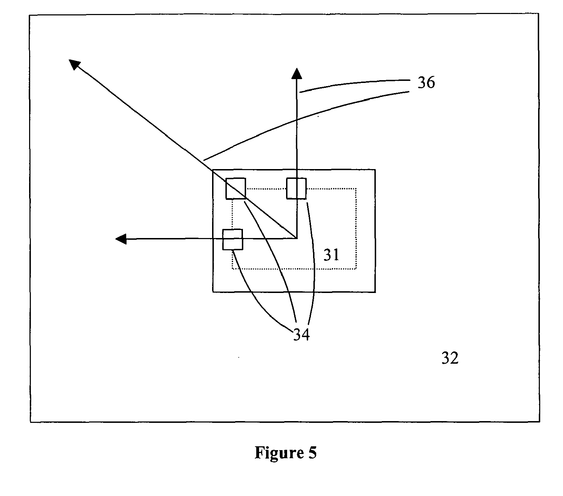

An alternative synthesis algorithm - presented in Figure 5 - uses the averaging technique as described above, but generates the 'Surround Video' image 32 by extrapolating the location of each pixel in the 'Surround' image back to the centre of the original video image 31 and colouring it according to the colour of the pixel on the edge of the original image which lies closest to the line 36 extrapolated between the centre pixel and the 'Surround Video' pixel.

### 3. Measurement of object or camera motion to render a moving texture pattern

Motion cues can be one of the more important cues to come from peripheral vision. Therefore one method of synthesizing the surround video is to generate an image with motion properties that match those of the main image. For example, a pseudo-random texture could be generated, which is moved in accordance with the estimated movement of the camera. Thus, when the camera pans left, the texture is moved to the left at a rate that matches the movement in the main image. Alternatively, instead of using a pseudo-random texture, some features of the image (such as fine detail) could be extracted and replicated to fill the surround image, in such a way that motion in the main image results in the replicated texture moving at a matching speed in the surround image.

By taking just the fine detail from the image, the replication process can be substantially hidden, resulting in a texture with an apparently random appearance, but which moves in largely the same way as the content of the main image. The low frequencies in the surrounding image could be synthesized using one of the colour extrapolation methods described above.

### 4. Extrapolation of image texture using object or camera movement

Having analyzed object movement in a video image (extracting object size and position over time to derive its speed, direction and possibly its acceleration), a representation of moving objects can be synthesized in the surround video image. The analyzed movement properties are applied to the object being rendered in the surround image, giving the impression that it continues traveling off to the sides (or top or bottom) of the main image. Similar techniques could be applied to camera rather than object movement (that is, by measuring the apparent movement of the background), to build up a wide-angle image using a method similar to the well-known 'image stitching' approach used to build panoramic images from a series of overlapping still images. This kind of processing would preferably process an entire image sequence before producing any synthesized surround video, because information for a given frame may usefully be taken from both preceding and following points in time. It thus may be more applicable as a pre-processing stage, implemented by the broadcaster to generate a surround video channel before the video was delivered. Alternatively, the processing could take place using stored content in a domestic device (such as a PC with a DVD drive) to generate the surround video for a programme or film before viewing it.

An example of the steps involved in this image synthesis process is as follows:
1. For each video frame, segment it into objects having different motions. Methods are known to achieve such segmentation, see for example Chung, H.Y. et al "Efficient Block-based Motion Segmentation Method using Motion Vector Consistency". In Proc. IAPR Conference on Machine Vision Applications (MVA2005), pages 550-553, Tsukuba Science City, Japan, May 2005 (http://www.csis.hku.hk/~kykwong/publications/hychung_mva05.pdf)
2. For each object, look through the list of objects that have been seen before, and identify a corresponding object, by matching parameters such as object size, location, and direction of movement. Update the stored motion vector, size, shape and image information associated with the matching object, using the information from the current frame. If parts of the object are no longer visible due to having moved outside the image or having moved behinds another object, leave the shape and image information for these parts unchanged. If no corresponding object has been seen before, create a new object on the list of observed objects.
3. For all objects in the list, delete those that were expected to be seen in the current frame and were not. For those that were not expected to be seen (i.e. those that lie wholly outside the image), update their location by assuming they continue moving at constant velocity.
4. Synthesize an initial surround video image using one of the methods mentioned earlier, such as Edge Colour Extrapolation.
5. For each object in the list that lies partly or wholly outside the image, draw the object using its stored location and image data at the appropriate position into the synthesized surround video image. Optionally, the objects may be drawn with a transparency level or degree of low-pass filtering that increases in accordance with the length of time since the object disappeared from the main image, or the distance it has travelled.

A number of alternative implementations are possible and the embodiments described above are in no way exhaustive or limiting. Some possibilities for modification include:
■ Using a projector rather than CRT or flat-screen display to present the main video stream.
■ Using a projector with a wide angle lens to present the surround video image.
■ Using any other future video display device (such as electronic wallpaper) to show either the main or surround video image. In the case of proposals such as electronic wallpaper (which can be based on liquid crystal display technology), driving of the wallpaper shall be construed as "projection" onto the surrounding objects.
■ Using a single high-resolution camera with wide-angle lens to capture the footage, and electronically extracting a centre portion to create the main video stream.

Other known techniques could be incorporated to enhance a projection-based surround video system. For example, methods are known to perform accurate compensation of projected images when projecting onto irregular surfaces with varying reflectivity, such as may be found in a typical home environment. Such a method is described in "Bimber, O. et al. Enabling View-Dependant Stereoscopic Projection in Real Environments. Fourth International Symposium on Mixed and Augmented Reality, Oct 5-8, Vienna, Austria, pp. 14-23".

To apply such a method, one approach would be to use a camera to capture images of a series of projected calibration patterns. The camera should preferably be placed at the position of a typical viewer's head (e.g. someone sitting in the middle of the sofa in a living room), although alternatively for convenience it could be integrated into the projector unit. The calibration patterns could consist of a series of lines, dots or squares in different positions in the projected image. By analyzing the captured image of each projected pattern, it is possible to calculate the geometric, brightness and colour corrections that should be applied to the projected image in order to compensate for the non-ideal geometry and reflectivity of the walls onto which the image is being projected. The captured images could also be analyzed to determine the location and size of the main display screen, which would allow the scaling and positioning of the projected image to be adjusted to match.

It should be understood that the invention has been described by way of example only and that a wide variety of modifications are possible without departing from the scope of the invention. Features that have been described in various combinations may offer advantages when used alone or when used in combinations other than those specifically mentioned.

## Claims

1. A method of providing a video display comprising the steps of providing a primary video display in a primary display region; providing a surround video display in a region surrounding the primary display region, wherein the surround video display is of lower quality than the primary video display.

2. A method according to Claim 1, wherein the primary video display is provided by a primary display device having a dedicated screen area.

3. A method according to Claim 2, wherein the primary video display is provided by a device having an active screen.

4. A method according to Claim 2, wherein the surround video display is provided by projection onto at least one object surrounding the primary display device.

5. A method according to Claim 4, further comprising compensating the projected surround video display based on the geometry of said at least one object.

6. A method according to any one of the preceding claims, wherein apparent motion of at least one object in the primary video display is extrapolated into the surround video display.

7. A method according to any one of the preceding claims, wherein the surround video display is of lower resolution than the primary display and wherein the surround video display extends over a substantially larger field of view than the primary display.

8. A method according to Claim 7, further comprising receiving at least one encoded video signal and providing a primary signal to cause the primary display device to display the primary video and a surround signal to cause a surround video projector to display the surround video.

9. A method according to Claim 8, comprising synthesizing at least a part of a surround video signal based on the content of a primary video signal.

10. A method according to any one of the preceding claims, wherein a surround video signal is provided by transforming generic surround images in real time based on the geometry of the surroundings of the primary video display.

11. A method of distributing video content, comprising the steps of supplying a primary representation of a first view of a scene which representation is decodable to provide a primary video display; and supplying a surround representation of a second view of the scene, which surround representation is separately decodable to provide a surround video display in a region surrounding the primary display region.

12. A method according to Claim 11, wherein second view of the scene, is a wider angle view than said first view.

13. **A method according to Claim 11 or Claim 12, wherein the primary** representation comprises a primary video signal and the surround representation comprises a surround video signal which is more coarsely quantised or encoded at a lower bit rate than the primary video signal.

14. A method according to any one of Claims 11 to 13, wherein the surround video display has a lower colour or luminance resolution than the primary video display.

15. Video processing apparatus comprising an input stage for receiving a video input; a primary display driver connected with the input stage and adapted to provide a primary video signal for a primary display on a screen in a room; and a surround video processor connected with the input stage and adapted to provide a surround video signal for a surround display projected onto surfaces of the room adjacent the screen, the surround video processor being adapted to hold geometrical parameters of said surfaces and to compensate in said surround video signal for said parameters.

16. Apparatus according to Claim 15, wherein the input stage is adapted to receive a primary video input accompanied by surround video information.

17. Apparatus according to Claim 15 or Claim 16, wherein the surround video information comprises a video signal representing a wider angle view of a scene represented in the primary video signal.

18. Apparatus according to any one of Claims 15 to 17, wherein the surround video processor is adapted to mask the area of said screen in the surround video signal.

19. Apparatus according to Claim 15, wherein the surround video processor is adapted to analyze primary video information contained in the video input and to synthesize therefrom a surround video signal.

20. Apparatus according to any one of Claims 15 to 19, wherein the surround video processor is adapted such that the trajectory of moving objects represented in the primary display is extrapolated into the surround display.

21. Video processing apparatus comprising an input stage for receiving a video input; a primary display driver connected with the input stage and adapted to provide a primary video signal for a primary display; a surround video processor connected with the input stage adapted to provide a surround video signal for a surround display in which the trajectory of moving objects represented in the primary display is extrapolated into the surround display.

22. Apparatus according to Claim 21, wherein the primary display driver is adapted to provide a primary video signal for a primary display on a screen in a room and wherein the surround video processor is adapted to provide a surround video signal for a surround display projected onto surfaces of the room adjacent the screen.

23. Apparatus according to Claim 21 or Claim 22, wherein the surround video processor is adapted to hold geometrical parameters of said surfaces and to compensate in said surround video signal for said parameters.

24. Apparatus according to any one of Claims 15 to 23, further comprising a projector receiving the surround video signal.

25. A method of calibrating a video display apparatus including a primary video display and a surround video projector, the method comprising storing data indicative of the geometry and/or reflectivity and/or colour of the surroundings of the primary video display for use in modifying a surround video image to be projected onto the surroundings.

26. A method according to Claim 25, comprising setting at least one calibration parameter based on an image obtained from a camera associated with a projector for projecting the surround video image.

27. A method according to Claim 26, further comprising projecting at least one calibration image or video sequence.

28. Video capture apparatus comprising; primary video capture means for capturing primary video corresponding to at least one broadcast standard for a primary field of view; surround video capture means for capturing surround video for a surround field of view surrounding the primary field of view.

29. Apparatus according to Claim 28, wherein the surround video capture means is arranged to capture video overlapping with or encompassing the primary field of view.

30. A computer program or computer program product or logic or video processing hardware configured to perform a method in accordance with any one of Claims 1 to 14 or 25 to 27.
